(19) **Europäisches Patentamt**
**European Patent Office**
**Office européen des brevets**

(11) **EP 3 579 168 A1**

(12) **EUROPEAN PATENT APPLICATION**
published in accordance with Art. 153(4) EPC

(43) Date of publication:
**11.12.2019 Bulletin 2019/50**

(21) Application number: **17895370.9**

(22) Date of filing: **19.10.2017**

(51) Int Cl.:
**G06Q 30/02** *(2012.01)*  **G06Q 10/10** *(2012.01)*

(86) International application number:
**PCT/JP2017/037874**

(87) International publication number:
**WO 2018/142685 (09.08.2018 Gazette 2018/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.01.2017 JP 2017015709**

(71) Applicant: **Sony Corporation**
**Tokyo 108-0075 (JP)**

(72) Inventors:
• **MIYAZAKI, Mitsuhiro**
**Tokyo 108-0075 (JP)**
• **YAEDA, Juri**
**Tokyo 108-0075 (JP)**
• **SAITO, Mari**
**Tokyo 108-0075 (JP)**
• **KIRIHARA, Reiko**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING METHOD, AND PROGRAM**

(57)    To provide an information processing apparatus, an information processing method, and a program capable of issuing a notice for prompting schedule registration at a timing suitable for the user.

The information processing apparatus, including: an event recommendation control unit configured to predict, on the basis of a behavior history of the user, occurrence of an event in future, the event recommendation control unit being configured to determine a notice timing for prompting schedule registration of the predicted event, in consideration of a preparation period of time of the user for the predicted event.

# FIG. 1

EP 3 579 168 A1

**Description**

TECHNICAL FIELD

The present disclosure relates to an information processing apparatus, an information processing method, and a program.

BACKGROUND ART

Conventionally, there have been proposed information presentation and recommendation techniques according to preferences of the user.

For example, Patent Document 1 below discloses that implicit preference information is registered from an activity of a user (e.g., web browsing, use of contents via a network, and viewing/listening, and recording of a broadcast program), a question with a voice is output to the user on the basis of the implicit preference information, and explicit preference information is registered from the obtained answer. Furthermore, Patent Document 1 describes that a program is recommended with the explicit preference information acquired in such a manner. The examples of the program recommendation method include a method of automatically setting a channel to a program for recommendation, and a method of displaying recommendation information regarding a program to be broadcast within a predetermined time from the current time and the method is determined by the setting of the user.

Furthermore, a personal assist that has been practically used in recent years is capable of presenting information required in accordance with the current behavior of the user (e.g., schedule of today, travel time to a destination, nearby spots, and departure time of the next service), on the basis of a plurality of pieces of information such as calendar information, schedule information, and current location information, in the terminal.

CITATION LIST

PATENT DOCUMENT

Patent Document 1: Japanese Patent Application Laid-Open No. 2015-35140

SUMMARY OF THE INVENTION

PROBLEMS TO BE SOLVED BY THE INVENTION

The timing of scheduling, however, is different depending on individuals. Even though spot information according to a preference of the user is recommended, the recommendation information is insufficiently utilized in a case where the recommended timing does not match the behavior determination timing of the user.

Therefore, in the present disclosure, there are proposed an information processing apparatus, an information processing method, and a program capable of issuing a notice for prompting schedule registration at a timing suitable for the user.

SOLUTIONS TO PROBLEMS

According to the present disclosure, there is proposed an information processing apparatus, including: an event recommendation control unit configured to predict, on the basis of a behavior history of a user, occurrence of an event in future, the event recommendation control unit being configured to determine a notice timing for prompting schedule registration of the predicted event, in consideration of a preparation period of time of the user for the predicted event.

According to the present disclosure, there is proposed an information processing method with a processor, including: predicting occurrence of an event in future, on the basis of a behavior history of a user; and determining a notice timing for prompting schedule registration of the predicted event, in consideration of a preparation period of time of the user for the predicted event.

According to the present disclosure, there is proposed a program for causing a computer to function as an event recommendation control unit configured to: predict occurrence of an event in future, on the basis of a behavior history of a user; and determine a notice timing for prompting schedule registration of the predicted event, in consideration of a preparation period of time of the user for the predicted event.

EFFECTS OF THE INVENTION

As described above, the present disclosure makes it possible to issue a notice for prompting schedule registration at a timing suitable for the user.

Note that the above effect is not necessarily limited; and in addition to or instead of the above effect, there may also be exhibited any of effects indicated in the present specification or another effect that can be grasped from the present specification.

BRIEF DESCRIPTION OF DRAWINGS

Fig. 1 is an explanatory diagram of the overview of an information processing system according to an embodiment of the present disclosure.
Fig. 2 is a block diagram of an exemplary configuration of an information distribution terminal according to the present embodiment.
Fig. 3 is a block diagram of an exemplary hardware configuration of a server according to the present embodiment.
Fig. 4 is a block diagram of exemplary functional configurations of a control unit and a storage unit of the server according to the present embodiment.
Fig. 5 is a table of an exemplary data structure of a spot according to the present embodiment.
Fig. 6 is a table of an exemplary data structure of the spot according to the present embodiment.
Fig. 7 is a table of an exemplary data structure of a user history (feedback) stored in a user history storage unit according to the present embodiment.
Fig. 8 is an explanatory table of an exemplary event notice according to the present embodiment.
Fig. 9 is a view of an exemplary display screen of an event recommendation notice according to the present embodiment.
Fig. 10 is a flowchart of generating processing on spot recommendation information for an event according to the present embodiment.
Fig. 11 is a flowchart of event recommendation notice processing according to the present embodiment.

MODE FOR CARRYING OUT THE INVENTION

A preferred embodiment of the present disclosure will be described in detail below with reference to the accompanying drawings. Note that, in the present specification and the drawings, the same reference numerals are given to constituent elements each having substantially the same functional configuration, and redundant description will be omitted.

Furthermore, the description will be made in the following order.

1. Overview of Information Processing System according to Embodiment of Present Disclosure
2. Configurations

2-1. Configuration of Information Distribution Terminal
2-2. Configuration of Server

3. Operation Processing

3-1. Spot Recommendation Processing
3-2. Recommendation Event Notice Processing

4. Supplement
5. Conclusion

<<1. Overview of Information Processing System according to Embodiment of Present Disclosure>>

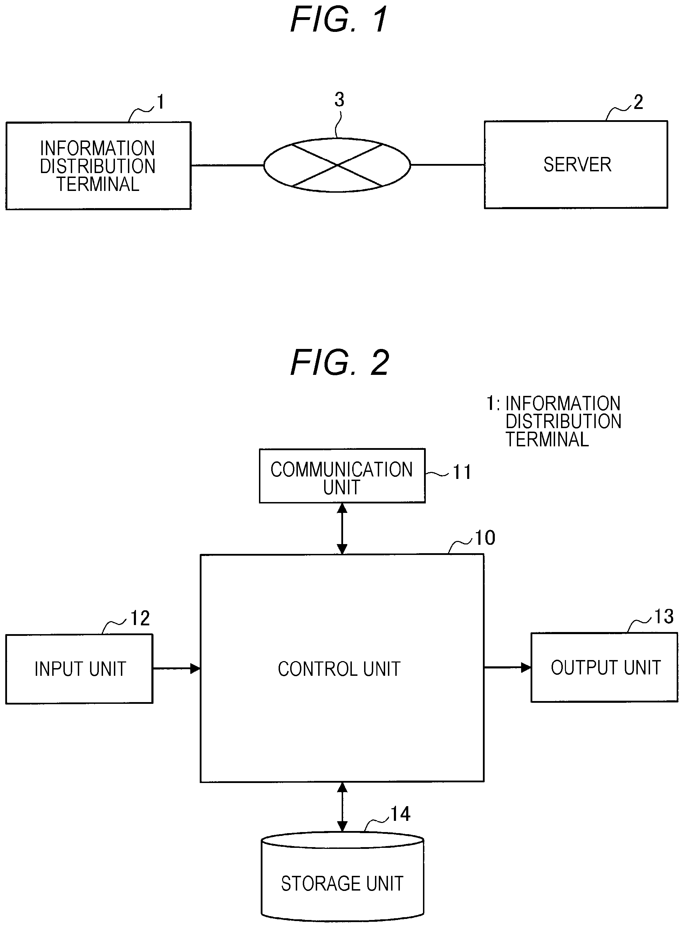

Fig. 1 is an explanatory diagram of the overview of an information processing system according to the embodiment of the present disclosure. As illustrated in Fig. 1, the information processing system according to the present embodiment includes an information distribution terminal 1 that presents recommendation information to a user, and a server 2 that analyzes spot information and controls event recommendation. The information distribution terminal 1 and the server 2 are connected via a network 3 to transmit and receive data. Note that, a client server system is used as an example here; however, the present embodiment is not limited to the client server system.

The information distribution terminal 1 allows a user to browse and operate information regarding spots, events, and schedules, and is assumed as a consumer-electronics appliance (CE appliance), a smartphone, a tablet terminal, a mobile phone terminal, a wearable terminal, a voice agent device, or the like. As the voice agent device, for example, there is assumed a home agent or the like used by a family (a specific user group). The voice agent device has functions such as family schedule management, provision of news and weather forecast, and information search.

The server 2 is capable of referring to a behavior history of the user and analysis information regarding a resort spot to recommend an event such as a family trip on the basis of a preferences and a habit of the user, and performing control to notify the user (notice for prompting event preparations) from the information distribution terminal 1 at a timing suitable for the user.

The respective configurations of the devices included in the information processing system according to the present embodiment described above will be specifically described below with reference to the drawings.

«2. Configurations»

<2-1. Configuration of Information Distribution Terminal 1>

Fig. 2 is a block diagram of an exemplary configuration of the information distribution terminal 1 according to the present embodiment. As illustrated in Fig. 2, the information distribution terminal 1 includes a control unit 10, a communication unit 11, an input unit 12, an output unit 13, and a storage unit 14.

The control unit 10 functions as a computation processing device and a control device, and controls the overall operation in the information distribution terminal 1 in accordance with various programs. The control unit 10 is implemented by, for example, an electronic circuit such as a central processing unit (CPU) and a microprocessor. Furthermore, the control unit 10 may include a read only memory (ROM) that stores, for example, a program and a computation parameter to be used, and a random access memory (RAM) that temporarily stores, for example, a parameter that varies suitably.

The control unit 10 according to the present embodiment causes the output unit 13 to present notice information received from the server 2 via the communication unit 11 to the user. Furthermore, the control unit 10 also causes the storage unit 14 to store input information input by the input unit 12 and controls transmission of the input information input by the input unit 12 to the server 2 via the communication unit 11.

The communication unit 11 is connected to the network 3 wiredly or wirelessly, and transmits data to and receives data from the server 2. The communication unit 11 is connected to communicate with the network 3 via, for example, a wired/wireless local area network (LAN), Wi-Fi (registered trademark), a mobile communication network (long term evolution (LTE), 3G (third generation mobile communication system)), and the like.

The input unit 12 serves as an interface that detects input information to the information distribution terminal 1 and outputs the input information to the control unit 10. For example, the input unit 12 may be an operation input unit, a voice input unit (microphone), or a camera. The operation input unit may be a touch sensor, a pressure sensor, or a proximity sensor integrally provided with a display screen (an example of the output unit 13) of the information distribution terminal 1. Alternatively, the operation input unit may have a physical configuration such as a button, a switch, and a lever. Furthermore, the input unit 12 may be a sensor (e.g., an accelerometer, a gyro sensor, a geomagnetic sensor, a biosensor, or an environment sensor) that detects a behavior of the user, or may be a location positioning unit. The location positioning unit has a function of detecting the current location of the information distribution terminal 1, on the basis of a signal acquired externally. Specifically, for example, the location positioning unit is implemented by a global positioning system (GPS) positioning unit. The location positioning unit receives a radio wave from a GPS satellite, detects a location where the information distribution terminal 1 is present, and outputs the detected location information to the control unit 10. Furthermore, in addition to the GPS, the location positioning unit may detect a location, for example, with Wi-Fi (registered trademark), Bluetooth (registered trademark), transmission to and reception from a mobile phone, a personal handyphone system (PHS), a smart phone, or the like, or near distance communication or the like.

The output unit 13 is implementable by a display unit that outputs an image or text, or a voice output unit (speaker) that outputs a voice. The display unit may be, for example, a display device such as a liquid crystal display (LCD) or an organic electroluminescence (EL) display.

The storage unit 14 is implemented by a read only memory (ROM) that stores, for example, a program, a computation parameter to be used for processing by the control unit 10, and the like, and a random access memory (RAM) that temporarily stores, for example, a parameter that varies suitably, or the like.

The configuration of the information distribution terminal 1 according to the present embodiment has been specifically described above. Note that the configuration of the information distribution terminal 1 described above is an example, and the present embodiment is not limited to the configuration.

<2-2. Configuration of Server 2>

(2-2-1. Hardware Configuration)

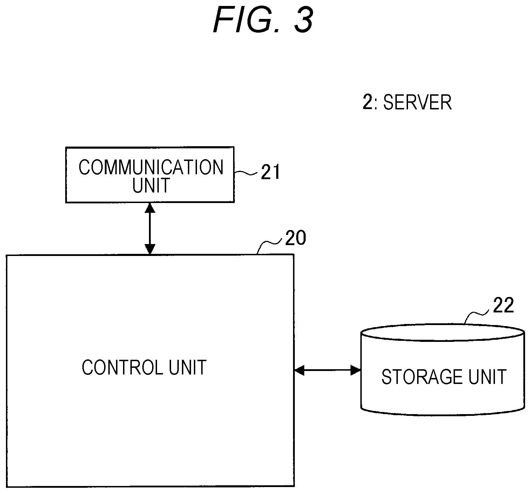

Fig. 3 is a block diagram of an exemplary hardware configuration of the server 2 according to the present embodiment. As illustrated in Fig. 3, the server 2 (information processing apparatus) includes a control unit 20, a communication unit 21, and a storage unit 22.

(Control Unit 20)

The control unit 20 functions as a computation processing device and a control device, and controls the overall operation in the server 2 in accordance with various programs. The control unit 20 is implemented by, for example, an electronic circuit such as a central processing unit (CPU) and a microprocessor. Furthermore, the control unit 20 may include a read only memory (ROM) that stores, for example, a program, a computation parameter to be used, and the like, and a random access memory (RAM) that temporarily stores, for example, a parameter that varies suitably, or the like.

(Communication Unit 21)

The communication unit 21 is connected to the network 3 wiredly or wirelessly, and transmits data to and receives data from a number of information distribution terminals 1. Furthermore, the communication unit 21 is connected to communicate with the network 3 via, for example, a wired/wireless local area network (LAN), Wireless Fidelity (Wi-Fi (registered trademark)), or the like.

(Storage Unit 22)

The storage unit 22 is implemented by a ROM that stores, for example, a program, a computation parameter, or the like, to be used for processing by the control unit 20, and a RAM that temporarily stores, for example, a parameter or the like that varies suitably.

(2-2-2. Functional Configurations)

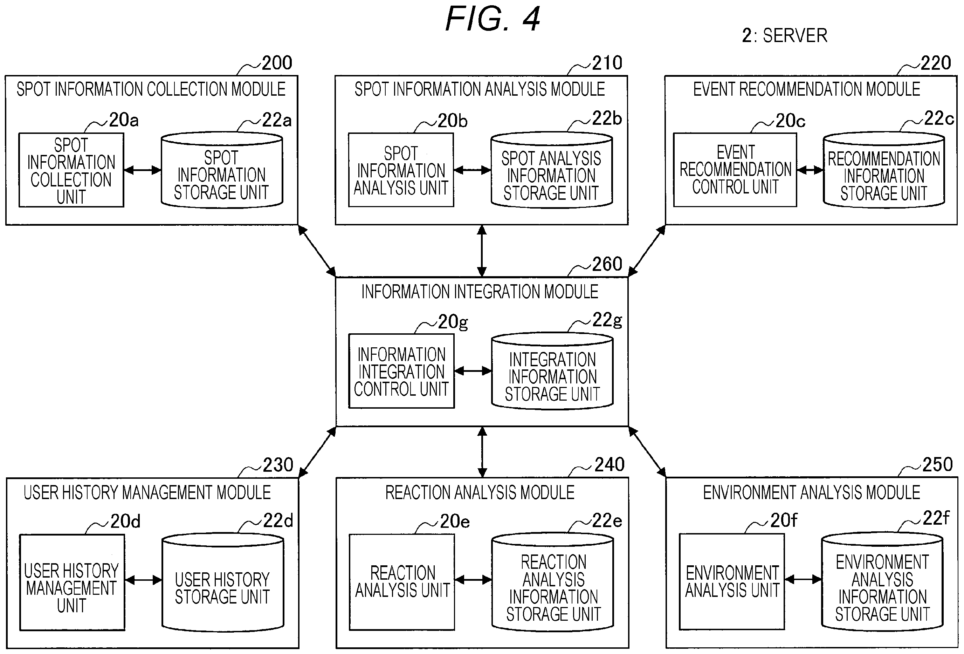

Subsequently, the functional configurations of the control unit 20 and the storage unit 22 of the server 2 will be described with reference to Fig. 4. Fig. 4 is a block diagram of exemplary functional configurations of the control unit 20 and the storage unit 22 of the server 2 according to the present embodiment.

As illustrated in Fig. 4, the server 2 functions as a spot information collection module 200, a spot information analysis module 210, an event recommendation module 220, a user history management module 230, a reaction analysis module 240, an environment analysis module 250, and an information integration module 260.

(Spot Information Collection)

The spot information collection module 200 includes a spot information collection unit 20a and a spot information storage unit 22a. The spot information collection unit 20a collects metadata of a resort spot from, for example, an official website, a going-out information site on the network, and the like (performs so-called Web crawling), and the collected metadata (an example of spot information) is accumulated into the spot information storage unit 22a. Examples of the metadata include, target age, address, opening hours, fee, access, parking lot information, field, detailed metadata (e.g., tag information optionally tagged by an information site user), nearby weather forecast, word of mouth (comment on experience) of the resort spot, and the like.

(Spot Information Analysis)

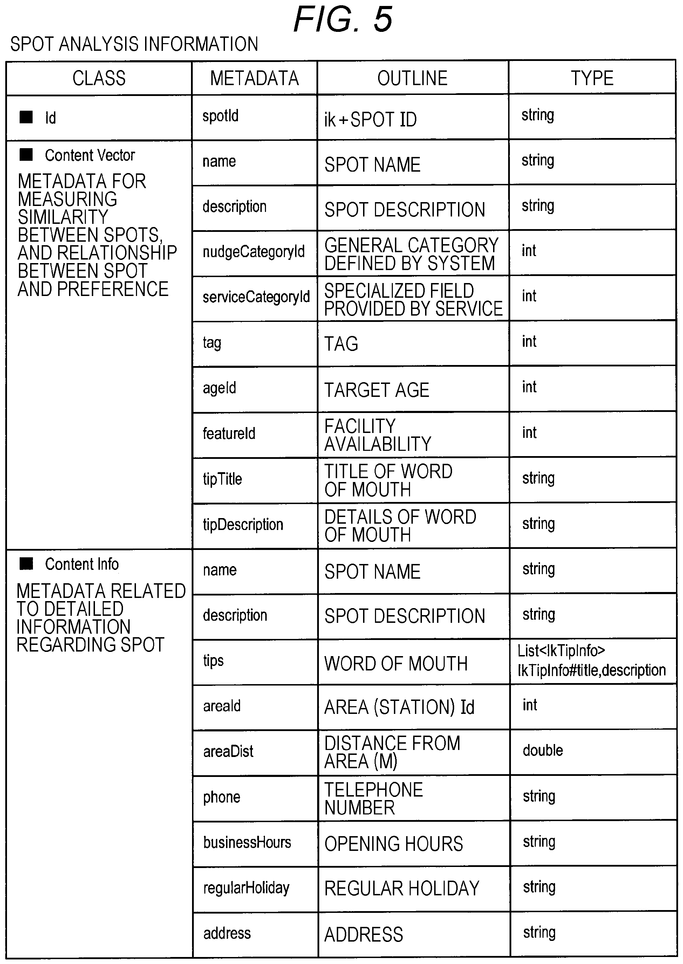

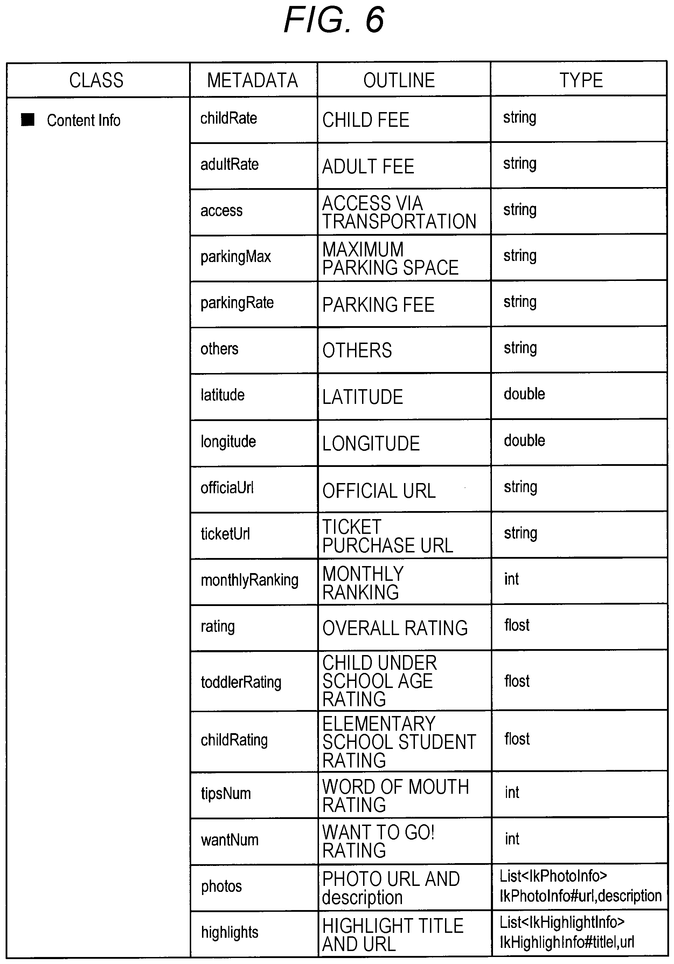

The spot information analysis module 210 includes a spot information analysis unit 20b and a spot analysis information storage unit 22b. The spot information analysis unit 20b analyzes the metadata collected by the spot information collection module 200. Specifically, for example, the spot information analysis unit 20b generates, for each spot (content), a vector (content profile) having a score for an attribute value of the metadata by using the method disclosed in Japanese Patent Application Laid-Open No. 2005-176404. Here, Figs. 5 and 6 each indicate an exemplary data structure of a spot. As indicated in Figs. 5 and 6, the data structure of the spot (content) includes "ID", "Content Vector", and "Content Info". The "Content Vector" indicates metadata to be used for measuring the similarity between spots, and the relationship between a spot and a preference of the user. Examples of the "Content Vector" include items of description of spot (introductory sentence cluster), general category, and specialized field provided by service, tag, target age, facility availability, title of word of mouth, and details of word of mouth (word of mouth cluster). Furthermore, the "Content Info" indicates metadata related to detailed information regarding a spot, and examples of the "Content Info" include items of area, telephone number, opening hours, address, fee, latitude and longitude, rating, and the like. The distinction between the "Content Vector" and the "Content Info" is an example. The "Content Vector" and the "Content Info" may be partially duplicated, or may be suitably defined depending on the application. Furthermore, text in string type is morphologically analyzed (target part-of-speech is specifiable), and expressed as a keyword vector "(keyword, frequency)". For example, such text is converted into, (Aquarium, 2), (Attraction, 3), (Restaurant, 2), (Shopping, 1), (Hotel, 1), (Amusement, 1), and the like.

Furthermore, in clustering for introductory sentences and word of mouth, probabilistic latent semantic analysis (PLSA) or latent dirichlet allocation (LDA) widely used in text classification may be employed as a latent topic model method. The details of the PLSA are referred to Non-Patent Document 1: Thomas Hofmann, "Probabilistic latent semantic indexing", 1999, Proceedings of the 22nd annual international ACM SIGIR conference ON Research and development in information retrieval. Furthermore, the details of the LDA are referred to Non-Patent Document 2: David M. Blei, Andrew Y. Ng, Michael I. Jordan, "Latent Dirichlet Allocation", 2003, Journal of Machine Learning Research, Volume 3.

In the PLSA, for example, the latent topic z is used to express the occurrence probability p(w | d) of the word w in the introductory sentence d as the following expression.

[Mathematical Formula 1]

$$p(w \mid d) = \sum_z p(w \mid z)\, p(z \mid d)$$

That is, considering the latent topic z as a latent topic where an introduction sentence and a word occur, the occurrence probability of the word in the introductory sentence is decomposed into the "word occurrence probability for each latent topic" and the "topic attribute probability of the introductory sentence". In a case where the dimensionality of the topic z is defined as 5, the topic attribute probability related to introduction of a certain spot is expressed as {0.4, 0.1, 0.7, 0.2, 0.5}, which is the result of clustering.

Furthermore, "nudge Category Id" among the above metadata indicates a general category defined by the system, and "service Category Id" indicates a specialized field provided by the service. Examples of "nudge Category" include CAMP, BBQ, GUEST RANCH (dude ranch), OUTDOOR LEISURE, PARK, DOGRUN, AMUSEMENT PARK, THEME PARK, AQUARIUM, ZOO, FOOD THEMEPARK, SCIENCE MUSEUM, MUSEUM, ART MUSEUM, SHRINE, TEMPLE, and the like. Furthermore, examples of "service Category" include INDOOR AMUSEMENT PARK (indoor amusement park), SAFARIPARK, BOTANICAL GARDEN, FISHING, HIKING, FRUIT PICKING (fruit picking), FARMING ACTIVITY (agricultural experience), SOCIAL STUDY (field trip), EXPERIENCE FACILITY (facility for experience), and the like.

(Event Recommendation)

The event recommendation module 220 includes an event recommendation control unit 20c and a recommendation information storage unit 22c. The event recommendation control unit 20c performs event recommendation and notice control, on the basis of a preference and a habit of the user.

• Generation of Spot Recommendation Information for Event

First, the event recommendation module 220 generates spot recommendation information according to a preference of the user for an event, on the basis of information regarding the preference of the user, and the spot information (vectorized content profile) analyzed by the spot information analysis unit 20b. Specifically, the event recommendation control unit 20c analyzes a behavior history of the user included in a user history (user information such as a family structure may also be included) managed by the user history management module 230 to obtain a user preference, and the event recommendation control unit 20c matches the obtained user preference with the spot information to generate spot recommendation information for each event condition. The user preference may be expressed as a vector generated from metadata of a behavior of the user in the user history or a weighted sum of content profiles. The event recommendation control unit 20c is also capable of generating a user preference in which an attribute value is vectorized on the basis of the user history. In this case, for example, by using a method described in Japanese Patent Application Laid-Open No. 2005-176404, the event recommendation control unit 20c matches the user preference with the content profile (analysis result of the spot information by the spot information analysis unit 20b) (an inner product is computed for each item), and performs spot recommendation, on the basis of the matching score (e.g., the sum total of inner products between vectors).

For example, the event recommendation control unit 20c generates spot recommendation information according to a preference of the user, for each season (spring, summer, autumn, or winter), for each period of time (day trip, one night, or two nights or longer), and for each purpose (family trip, eating-out by couple, going-out by parent and child, or shopping by parent and child). Specifically, for example, there is obtained a recommendation result matched with an event condition (recommendation condition) as described below. At this time, the event recommendation control unit 20c may set a predetermined filter, such as exclusion of a spot where the user has already visited, in the recommendation result.

•• Examples of Spot Recommendation Result

Event conditions a: spring, one night, and trip by family

The first place ○○ Inn (△△ Hot spring)
The second place □□ Theme park
The third place ○○ Ranch

Event conditions b: summer, two nights or longer, and trip by family

The first place □□ Hotel
The second place O□ Inn
The third place △△ Amusement park

Event conditions c: winter, day trip, and going-out by parent and child

The first place △△ Concert
The second place ○○ Aquarium
The third place □□ Museum

Note that similarly, the event recommendation control unit 20c is also capable of performing event recommendation for a user group (e.g., family, and friend group), on the basis of a plurality of user preferences.

• Event Prediction

Furthermore, the event recommendation control unit 20c predicts occurrence of an event in future, on the basis of the user history. Specifically, the event recommendation control unit 20c extracts a past event from the user history, and predicts the next occurrence timing. For example, in a case where the user travels abroad every year during successive holidays in a specific period, the event recommendation control unit 20c predicts occurrence of a travel abroad event during successive holidays in the next same period. As described above, the event recommendation control unit 20c is capable of grasping the habit of the user on the basis of the user history, to predict occurrence of an event.

• Event Recommendation

Next, the event recommendation control unit 20c acquires spot recommendation information having the predicted event as a recommendation condition, from the above spot recommendation result, and determines the acquired spot recommendation information as event recommendation information. Note that the event recommendation control unit 20c may acquire a plurality of spot recommendation results (e.g., top five spots) each having the predicted event as the recommendation condition.

• Determination of Notice Timing

Next, the event recommendation control unit 20c determines a notice timing of the event recommendation information to the user. As described above, since the timing of determining a behavior is different depending on individuals, the event recommendation control unit 20c determines a suitable notice timing on the basis of the user history. Specifically, the event recommendation control unit 20c, for example, may estimate the difference between time information regarding an event having the same purpose in the past (actual execution date of the event) and the date of the event registered in schedule information (or the mean value of the difference between a plurality of events in the past) as a preparation period of time for the event, and may determine a date and time obtained by subtracting the preparation period of time from occurrence date and time of the predicted event as the optimal timing of prompting schedule registration of the predicted event.

Here, as an example, the period of the preparation and starting scheduling of the event is defined as the registration date and time in the schedule information. The present embodiment, however, is not limited to such a period, and there may be defined, for example, a date and time of search, by the user, of an event having the same purpose (e.g., search for a search site on the Web, or search with a voice agent), or a date and time of a conversation, by the user, related to an event having the same purpose (e.g., a conversation with another user by e-mail or chat, or a conversation with a voice agent).

Furthermore, the event recommendation control unit 20c may calculate the above preparation period of time in accordance with the field of a spot for an event for recommendation. For example, the event recommendation control unit 20c calculates the above preparation period of time as 30 days before for a hotel, 3 days before for a theme park, and 7 days before for a ranch. Furthermore, the event recommendation control unit 20c may change the above preparation period of time further depending on a season, a period, or popularity. Such a change allows early recommendation to the user in consideration of the risk of no vacant room of a hotel due to requirement of accommodation reservation and possible congestion depending on a season or a period, for example.

The recommendation control described above will be more specifically described in the flowchart as described later.

(User History Management)

The user history management module 230 includes a user history management unit 20d and a user history storage unit 22d. The user history management unit 20d performs data management such as registration and update of the user history in the user history storage unit 22d. Examples of the behavior history included in the user history include schedule history information, event occurrence history information (may reflect a behavior recognition result of the user in conjunction with a mobile device), an operation history (e.g., search history or browsing history), and a user reaction history. The user reaction history indicates a user reaction to event recommendation analyzed by the reaction analysis module 240 (operation history such as browsing of detailed information, bookmarking, reservation, schedule registration, and deletion), or a user reaction to an event experience (e.g., rating). The user reaction history may be accumulated together with environment information (time, place, behavior, and status) analyzed by the environment analysis module 250.

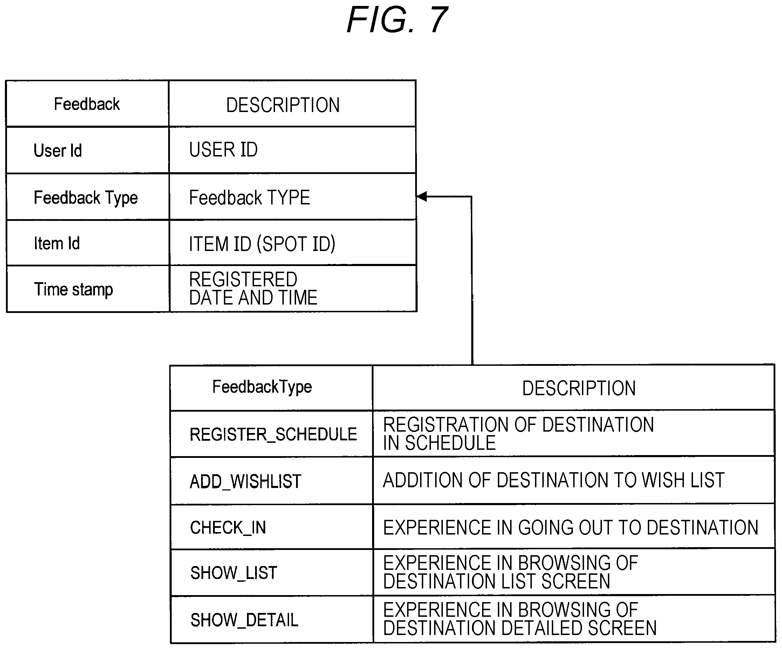

Here, Fig. 7 indicates an exemplary data structure of the user history (feedback) stored in the user history storage unit 22d. As indicated in Fig. 7, the user history (feedback) includes user ID, feedback type, item ID (e.g., spot ID), and time stamp (registered date and time). Examples of the feedback type, as indicated in Fig. 7, include registration of a destination (schedule, event) in the schedule (schedule history information), addition of a destination to a wish list, and experience in going out to a destination (event occurrence history information), experience in browsing of a destination list screen and the detailed screen (user reaction history).

(Reaction Analysis)

The reaction analysis module 240 includes a reaction analysis unit 20e and a reaction analysis information storage unit 22e. The reaction analysis unit 20e analyzes, for example, a user reaction (e.g., operation input or selection, text input, voice input, sign of emotion, and biological reaction) at the time of information distribution (specifically, for example, at the time of event recommendation) or at the time of behavior recognition (specifically, for example, at the time of event experience). The user reaction at the time of the event experience may be acquired, for example, by questioning with a voice agent or the like for prompting the user to make a rating.

(Environment Analysis)

The environment analysis module 250 includes an environment analysis unit 20f and an environment analysis information storage unit 22f. The environment analysis unit 20f analyzes, for example, the user's environment (e.g., time, place, behavior, and status) at the time of information distribution (specifically, for example, at the time of event recommendation) or at the time of behavior recognition (specifically, for example, at the time of event experience) or the like.

(Information Integration)

The information integration module 260 includes an information integration control unit 20g and an integration information storage unit 22g. The information integration control unit 20g controls exchange of information obtained from each module and transmission and reception of data with the information distribution terminal 1. For example, the information integration control unit 20g outputs the spot information obtained from the spot information collection module 200 to the spot information analysis module 210, and outputs the spot analysis information (content profile) obtained from the spot information analysis module 210 to the event recommendation module 220. Furthermore, the information integration control unit 20g outputs the user history obtained from the user history management module 230 to the event recommendation module 220. Furthermore, the information integration control unit 20g outputs the user reaction obtained from the reaction analysis module 240 and the user environment at the time of user reaction obtained from the environment analysis module 250, to the event recommendation module 220.

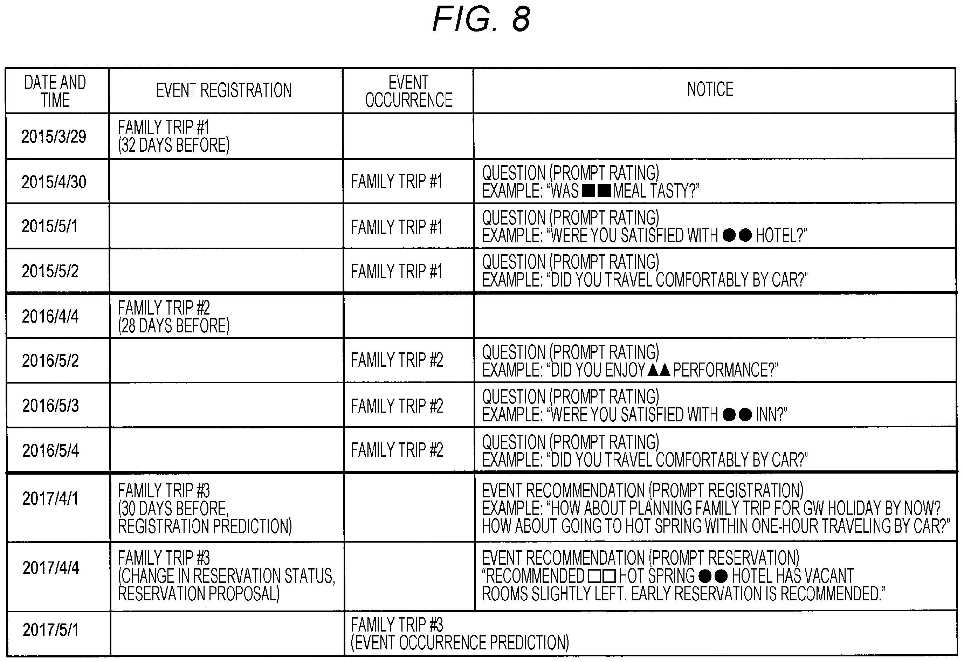

Furthermore, the information integration control unit 20g causes the information distribution terminal 1 to notify the user of the event recommendation information output from the event recommendation module 220, at a predetermined determined timing. Furthermore, the information integration control unit 20g is also capable of causing the information distribution terminal 1 to issue a notice of a question for prompting the user to make an event rating, at the time of the event occurrence. Here, an exemplary event notice according to the present embodiment will be described with reference to Fig. 8.

As indicated in Fig. 8, for example, in a case where on March 29th, 2015, the user registers the schedule of a family trip of 3 days and 2 nights from April 30th of the same year, the server 2 questions for prompting a rating on the details of the event on the event occurrence date. For example, as indicated in Fig. 8, the server 2 questions, "Was the dish of □□ tasty?", "Were you satisfied with the ○○ Hotel?", and "Did you travel comfortably by car?" (such questions may be made with a voice agent or in text), and obtains the rating from the user's answer. These questions may be generated on the basis of the schedule information (e.g., lunch at □□, stay at the ○○ Hotel, and drive) registered by the user. Furthermore, the server 2 may be in conjunction with a mobile device of the user (information distribution terminal 1) to generate the questions on the basis of a behavior recognition result of the user. The rating obtained from the user is analyzed by the reaction analysis module 240 and managed by the user history management module 230 as a preference of the user.

Subsequently, as indicated in Fig. 8, in a case where on April 4th, 2016, the user resisters the schedule of a family trip of 3 days and 2 nights from May 2nd of the same year, the server 2 similarly questions for prompting a rating on the details of the event on the event occurrence date.

Then, the event recommendation module 220 of the server 2 can grasp the user's habit of going out for a family trip around the beginning of May every year, on the basis of the above schedule registration (user history), and can predict occurrence of an event. Furthermore, since the schedule of the event is registered 30 days before on average, for predicting occurrence of an event on May 1st, 2017, the event recommendation module 220 determines April 1st of the same year 30 days before the predicted date, as the optimal notice timing. Furthermore, a spot to be proposed with the recommendation event is selected on the basis of the user history, in accordance with a preference of the user (e.g., frequently going to a hot spring, family trip of traveling by car, and the like) or a user preference such as a family structure and an event condition (e.g., period: May, period of time: two nights or longer, and purpose: family trip). With this selection, as indicated in Fig. 8, on April 1st, 2017 as the optimal behavior determination timing, the server 2 notifies the user of event recommendation through the information distribution terminal 1, the notice including "How about planning a family trip on golden week (GW) holiday by now? How about going to a hot spring within one-hour traveling by car?", or the like. Such event recommendation notice may be a voice notice or an on-screen notice. At this time, the server 2 may present a plurality of spots for recommendation.

Furthermore, in a case where a change occurs in the status of the recommended spot, the event recommendation module 220 of the server 2 may reissue an event recommendation notice. For example, as indicated in Fig. 8, in a case where the reservation of recommended ○○ Hotel starts to be filled, the event recommendation module 220 issues a notice such as "The recommended □□ Hot spring ○○ Hotel has vacant rooms slightly left. Early reservation is recommended.". The reservation status of the ○○ hotel can be analyzed by the spot information analysis module 210, and a change in the status can be given in notice to the event recommendation module 220 via the information integration module 260. As a result, a notice is issued at a timing in consideration of the cost of an event (for a change in, for example, hotel accommodation fee depending on the reservation period) and risk (e.g., reservation status and degree of congestion) that change by the minute. Thus, such a notice can prevent the user from losing an opportunity and allows the user to reserve a facility under reasonable conditions.

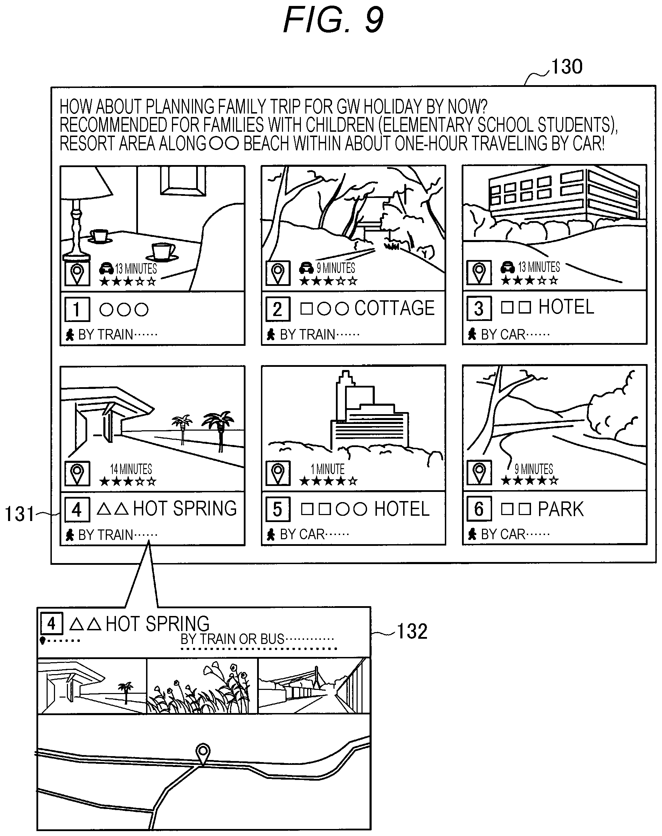

Here, Fig. 9 illustrates an exemplary display screen of the event recommendation notice. As illustrated in Fig. 9, on a recommendation information presentation screen 130, there is displayed reasons for recommendation and recommended spots. Examples of the reasons for recommendation include, "How about planning a family trip on GW holiday by now? Recommended for families with children (elementary school students), a resort area along the ○○ Beach within about one-hour traveling by car." Such a recommendation reason can be generated by the event recommendation module 220 on the basis of the information regarding the preference of the user and the event conditions used at the time of spot selection. Presentation of the reasons for recommendation in such a manner enhances the acceptability of the user to the proposals by the system.

The user can select a spot of interest to browse the detailed information. For example, in the example illustrated in Fig. 9, in a case where a fourth recommended spot 131 is selected, a detailed screen 132 is displayed. Note that such a user's operation history (e.g., which spot's detailed information has been browsed) is analyzed by the reaction analysis module 240, as a user reaction at the time of event recommendation.

The configuration of the server 2 according to the present embodiment has been specifically described above.

Note that the server 2 has the functional configuration illustrated in Fig. 4 as an example in the present embodiment. The present embodiment, however, is not limited to such a functional configuration, and the functional configuration illustrated in Fig. 4 may be constructed on the network with a plurality of devices.

<<3. Operation Processing>>

Subsequently, operation processing of the information processing system according to the present embodiment will be specifically described with the drawings.

<3-1. Spot Recommendation Processing>

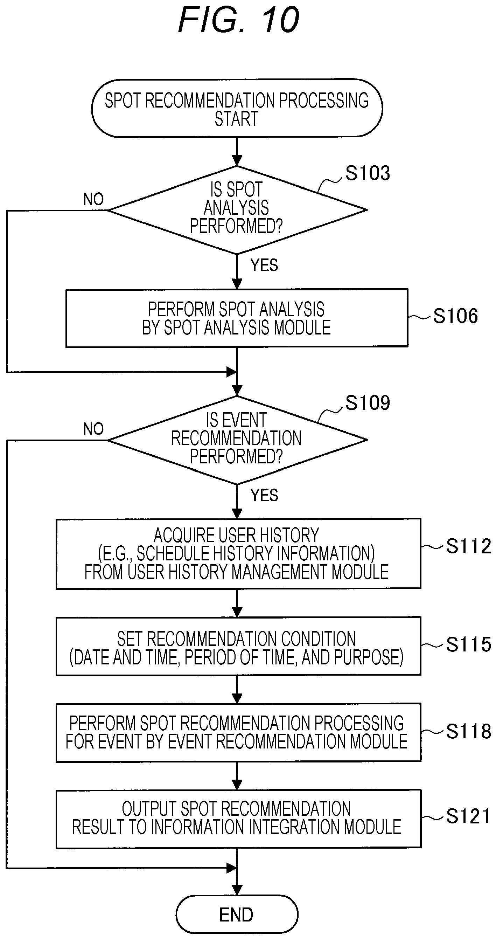

First, generating processing on spot recommendation information for an event will be described with reference to Fig 10. Fig. 10 is a sequence diagram of generating processing on spot recommendation information for an event according to the present embodiment.

As illustrated in Fig. 10, first, in a case where spot analysis is performed (step S103/Yes), the server 2 analyzes spot information collected by the spot information collection module 200, with the spot information analysis module 210 (step S106). The spot analysis may be performed periodically, for example, once every other week, once a month, or the like, or may be performed in a case where an update is made. Furthermore, the spot information analysis module 210 may also analyze spot information newly added or with the data updated.

In the spot analysis, such as described above, metadata obtained as spot information may be vectorized for each attribute value. Here, an example of spot analysis result analysis "{Content Vector} [Content Info]" is indicated.

- Spot A: {hot spring = 1.0, □□ region = 1.0, open-air bath = 0.6, buffet = 0.4, massage = 0.2} [latitude = xxx, longitude = xxx, popularity = 4.1, adult fee = 15,000 yen, child fee = 10,000 yen]
- Spot B: {theme park = 1.0, ○△ city = 1.0, safari = 0.8, experience = 0.5, bus = 0.3} [latitude = xxx, longitude = xxx, popularity = 4.4, adult fee = 27,000 yen, child fee = 1,500 yen]
- Spot C: {camp site = 1.0, △△ mountains = 1.0, dog run = 0.7, cottage = 0.5, bread = 0.4} [latitude = xxx, longitude = xxx, popularity = 3.6, fee = 4,000 yen]

Next, in a case where event recommendation is performed (step S109/Yes), the event recommendation module 220 acquires a user history (e.g., schedule information) from the user history management module 230 (step S112). The event recommendation may be performed periodically, for example, daily or once a week. Furthermore, the event recommendation may be performed for all users, or may be performed only for an active user. The active user may be determined, for example, for the user history managed by the user history management module 230, on the basis of whether or not the history has been updated (e.g., update of operation history) in the last n hours.

Furthermore, the event recommendation module 220 may obtain user preferences in which the user history is vectorized for each attribute value. Note that in a case where the user history is managed as a feedback history such as indicated in Fig. 7, content profiles of, for example, a spot targeted for the history (spot registered in the schedule (i.e., a target for the schedule history), a spot added to the wish list (i.e., a target for a wish history), a spot of experience in going out (i.e., a target for the behavior history), and a target of experience in browsing (i.e., a target for the operation history)), may be acquired to add together, and the content profiles added together may be included in the user preference. Here, an example of the acquired user preference "{Content Vector} [Content Info]" is indicated.

- May 2015, event; "trip by family", one night, spot X: {hot spring = 1.0, △□ region = 1.0, open-air bath = 0.6, Italian = 0.4, beauty treatment = 0.1} [latitude = xxx, longitude = xxx, popularity = 3.8, adult fee = 12,000 yen, child fee = 8,000]
- May 2016, event; "trip by family", one night, spot Y: {hot spring = 1.0, ○○ highland = 1.0, cottage = 0.5, Japanese meal = 0.3, massage = 0.2} [latitude = xxx, longitude = xxx, popularity = 4.2, adult fee = 16,000 yen, child fee = 10,000]

- November 2016, event; "going-out by parent and child", one night, spot Z: {camp site = 1.0, ○□ peninsula = 1.0, fishing = 0.7, tent = 0.3, hiking = 0.2} [latitude = xxx, longitude = xxx, popularity = 3.7, fee = 5,000 yen]

Note that, the respective examples of the above user preferences are acquired with addition together for "REGISTER_SCHEDULE" (registered in the schedule) among the items of Feedback Type; however, the present embodiment is not limited to the "REGISTER_SCHEDULE", and another item of the Feedback Type can be a target. For example, such a user preference may be obtained by weighting as REGISTER_SCHEDULE = 2.0, ADD_WISHLIST = 1.0, and CHECK_IN = 3.0 to add together.

Furthermore, in a case where event recommendation is performed on a user group, there can be generated a user preference for the group by adding together user preferences of a plurality of target users, thereby allowing recommendation to the group (respective recommendation results of the users may be added together).

Next, the event recommendation module 220 sets a recommendation condition (event condition) (step S115). Examples of the recommendation condition that can be assumed include a date and time, a period of time, and a purpose. For example, there can be assumed a period (e.g., season, month, and day of the week), a period of time (day trip/one night/two nights or longer), and a purpose (e.g., trip by family/eating-out by couple/going-out by parent and child/shopping by parent and child). A set of conditions may be set to select a recommendation spot for each event condition, or a condition of an event predicted by event prediction processing as described later may be set.

Next, the event recommendation module 220 performs spot recommendation processing (step S118). Specifically, for example, the event recommendation module 220 uses a user preference under recommendation conditions that are set (date and time, period of time, and purpose) to calculate a matching score with a content profile (spot analysis result). The event recommendation module 220 adds together the matching score for each of the recommendation conditions to obtain the final score, and then adds spots of top n number of scores to the recommendation conditions to obtain a recommendation result.

Here, the spot recommendation processing will be described by indicating of a specific calculation example. Here, as an example, conditions of an event predicted to occur in future by the event prediction processing as described later are set. For example, in a case where a one-night family trip event on May 1st, 2017 is predicted, the event recommendation module 220 sets "date and time: May 1st, 2017 = spring, period of time: one night, purpose: family trip", as recommendation conditions.

Next, the event recommendation module 220 generates a user preference for each of the recommendation conditions "spring", "one night", and "family trip", on the basis of the user history. For example, from the user history described above, content profiles of spot X and spot Y that have been visited in spring (event in May 2015 and event in May 2016) are added together, and the user preference of the recommendation condition "spring" is generated as below.

$$UP\,(spring) = spot\,X + spot\,Y:$$

{hot spring = 2.0, △□ region = 1.0, ○○ highland = 1.0, open-air bath = 0.6, Italian = 0.4, beauty treatment = 0.1, cottage = 0.5, Japanese meal = 0.3, massage = 0.2}

Furthermore, from the user history described above, the content profiles of spot X, spot Y, and spot Z that have been visited for one night (event in May 2015, event in May 2016, and event in November 2016) are added together, and the user preference of the recommendation condition "one night" is generated as below.

$$UP\,(one\,night) = spot\,X + spot\,Y + spot\,Z:$$

{hot spring = 2.0, camp site = 1.0, △□ region = 1.0, ○○ highland = 1.0, ○□ peninsula = 1.0, open-air bath = 0.6, Italian = 0.4, beauty treatment = 0.1, cottage = 0.5, Japanese meal = 0.3, massage = 0.2, fishing = 0.7, tent = 0.3, hiking = 0.2}

Furthermore, from the user history described above, the content profiles of spot X and spot Y that have been visited for family trip (event in May 2015 and event in May 2016) are added together, and the user preference of the recommendation condition "family trip" is generated.

$$UP\,(family\,trip) = spot\,X + spot\,Y:$$

{hot spring = 2.0, △□ region = 1.0, ○○ highland = 1.0, open-air bath = 0.6, Italian = 0.4, beauty treatment = 0.1, cottage = 0.5, Japanese meal = 0.3, massage = 0.2}

Next, the event recommendation module 220 matches UP (spring) with the respective content profiles of the spot A, the spot B, and the spot C (for example, with a vector cosine operation).

- UP (spring) and spot A:

$$\{1.0*2.0 \text{ (hot spring)} + 0.6*0.6 \text{ (open-air bath)} + 0.2*0.2 \text{ (massage)}\}/\{\sqrt(2.0^2 + 1.0^2 + 1.0^2 + 0.6^2 + 0.4^2 + 0.1^2 + 0.5^2 + 0.3^2 + 0.2^2) \text{ (UP norm)}*\sqrt(1.0^2 + 1.0^2 + 0.6^2 + 0.4^2 + 0.2^2) \text{ (A norm)}\} = 2.4/\{\sqrt6.91*\sqrt2.56\} = 0.570$$

- UP (spring) and spot B: 0.00 (no common metadata)
- UP (spring) and spot C:

$$\{0.5*0.5 \text{ (cottage)}/\{\sqrt(2.0^2 + 1.0^2 + 1.0^2 + 0.6^2 + 0.4^2 + 0.1^2 + 0.5^2 + 0.3^2 + 0.2^2) \text{ (UP norm)}*\sqrt(1.0^2 + 1.0^2 + 0.7^2 + 0.5^2 + 0.4^2) \text{ (C norm)}\} = 0.25/\{\sqrt6.91*\sqrt2.9\} = 0.055$$

Next, the event recommendation module 220 matches UP (one night) with the respective content profiles of the spot A, the spot B, and the spot C (for example, with a vector cosine operation).

- UP (one night) and spot A: {1.0*2.0 (hot spring) + 0.6*0.6 (open-air bath) + 0.2*0.2 (massage)}/{$\sqrt$(2.0^2 + 1.0^2 + 1.0^2 + 1.0^2 + 1.0^2 + 0.6^2 + 0.4^2 + 0.1^2 + 0.5^2 + 0.3^2 + 0.2^2 + 0.7^2 + 0.3^2 + 0.2^2) (UP norm)*$\sqrt$(1.0^2 + 1.0^2 + 0.6^2 + 0.4^2 + 0.2^2) (Anorm)} = 2.4/{$\sqrt$9.53*$\sqrt$2.56} = 0.485
- UP (one night) and spot B: 0.00 (no common metadata)
- UP (one night) and spot C:

$$\{1.0*1.0 \text{ (camp site)} + 0.5*0.5 \text{ (cottage)}/\{\sqrt(2.0^2 + 1.0^2 + 1.0^2 + 1.0^2 + 1.0^2 + 0.6^2 + 0.4^2 + 0.1^2 + 0.5^2 + 0.3^2 + 0.2^2 + 0.7^2 + 0.3^2 + 0.2^2) \text{ (UP norm)}*\sqrt(1.0^2 + 1.0^2 + 0.7^2 + 0.5^2 + 0.4^2) \text{ (C norm)}\} = 1.25/\{\sqrt9.53*\sqrt2.9\} = 0.237$$

Next, the event recommendation module 220 matches UP (family trip) with the respective content profiles of the spot A, the spot B, and the spot C (for example, with a vector cosine operation).

- UP (family trip) and spot A: {1.0*2.0 (hot spring) + 0.6*0.6 (open-air bath) + 0.2*0.2 (massage)}/{$\sqrt$(2.0^2 + 1.0^2 + 1.0^2 + 0.6^2 + 0.4^2 + 0.1^2 + 0.5^2 + 0.3^2 + 0.2^2) (UP norm)*$\sqrt$(1.0^2 + 1.0^2 + 0.6^2 + 0.4^2 + 0.2^2) (A norm)} = 2.4/{$\sqrt$6.91*$\sqrt$2.56} = 0.570
- UP (family trip) and spot B: 0.00 (no common metadata)
- UP (family trip) and spot C: {0.5*0.5 (cottage)/{$\sqrt$(2.0^2 + 1.0^2 + 1.0^2 + 0.6^2 + 0.4^2 + 0.1^2 + 0.5^2 + 0.3^2+ 0.2^2) (UP norm)*$\sqrt$(1.0^2 + 1.0^2 + 0.7^2 + 0.5^2 + 0.4^2) (C norm)} = 0.25/{$\sqrt$6.91*$\sqrt$2.9} = 0.055

Then, the event recommendation module 220 adds together the matching scores of the spot A, the spot B, and the spot C with each UP, and then calculates each final score as below.

- Spot A total = "UP (spring) and spot A" + "UP (one night) and spot A" + "UP (family trip) and spot A" = 0.570 + 0.485 + 0.570 = 1.625
- Spot B total = "UP (spring) and spot B" + "UP (one night) and spot B" + "UP (family trip) and spot B" = 0.000 + 0.000 + 0.000 = 0.000
- Spot C total = "UP (spring) and spot C" + "UP (one night) and spot C" + "UP (family trip) and spot C" = 0.055 + 0.237 + 0.055 = 0.347

Note that the event recommendation module 220 is also capable of narrowing down each of the target spots (spots A to C) by setting of a condition filter to the target spot. For example, narrowing down with popularity (an example of Content Info) may be performed. Specifically, for example, a spot having a "popularity" of less than 3.5 may be excluded from the recommendation result, on the basis of the metadata of the target spot. Alternatively, a matching score with UP and the degree of popularity may be weighted (for example, by adding together in 2 : 1) to calculate a total score. Furthermore, for example, the target spot can also be narrowed down, with the required time from the user's home (calculable from the latitude and longitude). Specifically, for example, a spot that takes one hour or longer by train may be excluded from the recommendation result.

Subsequently, the event recommendation module 220 outputs the spot recommendation result to the information integration module 260 (step S121). At this time, the event recommendation module 220 may exclude a spot having a calculated total score below a threshold or a spot for which a predetermined time (e.g., one day) has not passed since browsing on a recommendation screen by the user. Then, the event recommendation module 220 outputs remaining spots to the information integration module 260 as a spot recommendation result in the ascending order from the top total score.

For example, for the specific example calculated above, in a case where no spot is excluded through the condition filter, a total score has a threshold of 0.3, and no spot for which a predetermined time (e.g., one day) has passed is present, the event recommendation module 220 outputs a spot recommendation result "the first place spot A (= 1.625), the second place spot C (= 0.347)"under the event recommendation conditions "spring, one night, and family trip", to the information integration module 260.

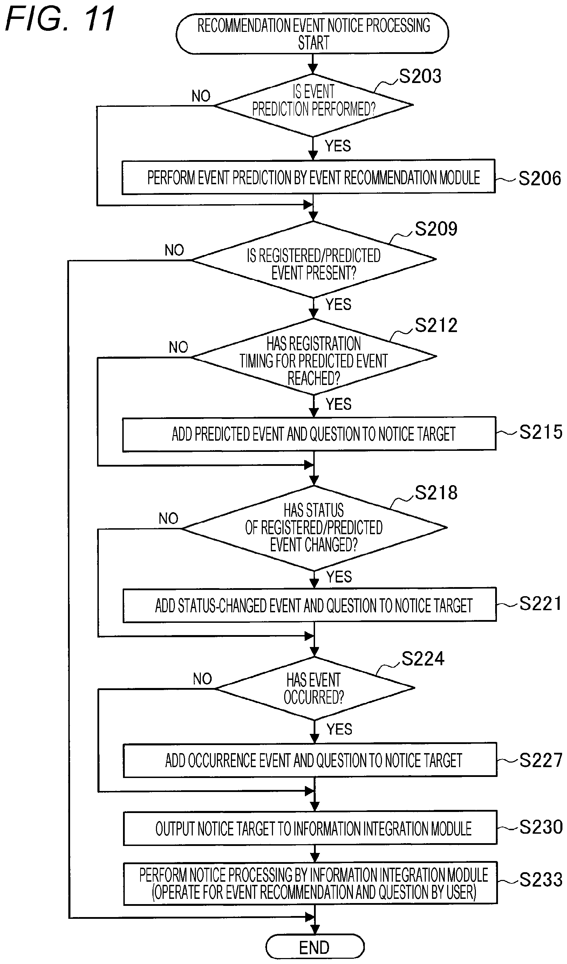

The spot recommendation processing for the event according to the present embodiment has been specifically described above. Subsequently, the recommendation event notice processing according to the present embodiment will be specifically described with reference to Fig 11.

<3-2. Recommendation Event Notice Processing>

Fig. 11 is a flowchart of the event recommendation notice processing according to the present embodiment.

As illustrated in Fig. 11, first, in a case where event prediction is performed (step S203/Yes), the event recommendation module 220 performs the event prediction (step S206). Such an event prediction can be performed periodically, for example, daily (once a day), once a week, or the like. Furthermore, specifically, the event recommendation module 220 extracts a past event of the user from the user history management module 230, and in a case where the extracted past event satisfies a predetermined condition (in a case where the habit can be grasped), the event recommendation module 220 predicts when the next event occurs. For example, in a case where an event for 2k + one days (e.g., April 26th to May 6th) including k days (e.g., k = five days) before and after a certain date (e.g., "May 1st") from the date and time of occurrence of the event having a certain purpose (e.g., "trip by family") has occurred for n consecutive years (e.g., n = two years) or longer (that is, the event as the "habit" has been grasped), the event recommendation module 220 predicts the next occurrence timing (i.e., event occurrence period). For example, as of April 2017, in a case where the event has occurred for two consecutive years of 2015 and 2016 or longer, the event recommendation module 220 can predict May 1st, 2017 as the next event occurrence. The event occurrence period is predictable on, for example, an annual basis, a monthly basis, or a weekly basis. The event recommendation module 220 registers the predicted event (for example, purpose: family trip, date: May 1st, 2017) into the recommendation information storage unit 22c. Note that a spot for the predicted event can be acquired by the spot recommendation processing described with reference to Fig. 10, with the predicted event as a condition. The event recommendation module 220 may preregister the predicted event together with the corresponding spot recommendation result, in the recommendation information storage unit 22c.

Next, in a case where the registered or predicted event is present (step S209/Yes), the event recommendation module 220 determines whether or not a registration timing of the prediction event has reached (step S212). In other words, the event recommendation module 220 determines whether or not a timing of registering of the predicted event into the schedule (or at least starting preparation) has reached. Specifically, for example, the event recommendation module 220 may extract metadata of the spot from the spot recommendation information for the predicted event, and may determine a notice timing (TG) in accordance with a field of the spot. For example, the notice timing may be 30 days before for a hotel, three days before for a theme park, and seven days before for a ranch, from an event occurrence date. Furthermore, the notice timing may be changed depending on a season or a period. Alternatively, the event recommendation module 220 may calculate, on the basis of the user history, the average number of days of the schedule registration timing TU of the user for each purpose of the event, and determines a date and time, as the notice timing, obtained by subtracting the average number of days from a predicted event occurrence period. For example, 30 days before for family trip, seven days before for going-out by parent and child, or three days before for eating-out by couple can be set as the notice timing. Note that, the notice timing is not limited to the schedule registration date. For example, the notice timing may be determined by grasping of a preparation period of time of the user on the basis of a period of somehow starting preparation of the event, such as a search date of information regarding the event, or an exchange date of information regarding the event by e-mail, social media including a social networking service (SNS), or the like.

Next, in a case where the notice timing has reached (notice timing corresponds to the current date and time) (step S212/Yes), the event recommendation module 220 adds the corresponding predicted event and a question to a notice target (step S215). The question may be generated, for example, from metadata of a recommendation spot for the predicted event (for example, "How about going to a hot spring within one-hour traveling by car?" or the like).

Next, in a case where the status of the registered or predicted event has changed (step S218/Yes), the event recommendation module 220 adds the status-changed event and a question to the notice target (step S221). Specifically, the event recommendation module 220 acquires (the latest) metadata of the recommendation spot for the registered/predicted event, and verifies whether or not there is a change (update) in, for example, the reservation status, the usage fee, and the opening hours. In a case where there is a change, the event recommendation module 220 determines the registered/predicted event as a status-changed event, and generates a question. For example, during prediction of a family trip event, in a case where the reservation status of a recommendation spot "□□ Hot spring ○○ Hotel" for the event is verified and the vacant rooms are slightly left, the event recommendation module 220 determines the family trip event as a status-changed event and generates a question (notice for prompting the reservation), for example, "The □□ Hot spring ○○ Hotel has vacant rooms slightly left!. Early reservation is recommended."

Subsequently, in a case where an event has occurred (step S224/Yes), the event recommendation module 220 adds the occurrence event and a question to the notice target (step S227). Detection of the currently occurring event may be determined by acquiring of time information regarding the event registered in the schedule information of the user. In addition, the currently occurring event may be detected by recognition of a behavior of the user in conjunction with a mobile device (information distribution terminal 1) of the user (e.g., location information or acceleration information). Furthermore, for example, during occurrence of a family trip event, the event recommendation module 220 extracts metadata of a spot from the detailed information regarding the event and generates a question (Were you satisfied with "the □□ Hot spring ○○ Hotel?", "Was your travel comfortable by car?", "Was the meal tasty?", or the like) Furthermore, when occurrence of the event is verified (for example, in a case where staying in a certain spot is found from latitude and longitude information acquired from a mobile device or the like), the reaction analysis module 240 of the server 2 may save the user history as CHECK_IN.

Next, the event recommendation module 220 outputs the notice target to the information integration module (step S230).

Then, the information integration module performs notice processing from the information distribution terminal 1 to the user (step S233). The reaction (operation or response) of the user to the notice or the question is transmitted from the information distribution terminal 1 to the server 2, and analyzed by the reaction analysis module 240. The analyzed reaction is saved, in accordance with the details, as the user history such as REGSITER_SCHEDULE, ADD_WISHLIST, SHOW_LIST, or SHOW_DETAIL (see Fig. 7).

The notice processing on the recommendation event according to the present embodiment has been specifically described above.

<<4. Supplement>>

Note that the event recommendation module 220 of the server 2 is also capable of recommending together an event or a spot as an advertisement.

For presentation of an event or a spot as an advertisement, the server 2 may change a tone of a voice of a voice agent or may change a display mode (e.g., background color, character color, or display of "advertisement") so as to allow the user to intuitively grasp the presentation as the advertisement. Furthermore, in a case where presenting of a recommendation event or spot by an advertisement and presenting of a recommendation event or spot by the above recommendation processing, the difference in the details may be described.

<<5. Conclusion>>

As described above, the information processing system according to the embodiment of the present disclosure makes it possible to issue a notice for prompting schedule registration at a timing suitable for the user.

The preferred embodiment of the present disclosure has been described above in detail with reference to the accompanying drawings; however, the present technology is not limited to such examples. It is obvious that persons having ordinary knowledge in the technical field of the present disclosure can conceive various alternation examples or modification examples within the scope of the technical idea described in the claims, and it is naturally understood that such alternation examples or modification examples belong to the technical scope of the present disclosure.

For example, there can be created a computer program for causing the hardware such as the CPU, ROM, and RAM built in the information distribution terminal 1 or the server 2 described above in order to exhibit the functions of the information distribution terminal 1 or the server 2. Furthermore, there is also provided a computer readable storage medium storing the computer program.

Furthermore, the effects described in the present specification are merely explanatory or exemplary, and are not limiting. That is, the technology according to the present disclosure can exhibit other effects obvious to those skilled in the art from the description of the present specification together with or instead of the above effects.

Note that the present technology can also take the following configurations.

(1) An information processing apparatus, including:

an event recommendation control unit configured to predict, on the basis of a behavior history of a user, occurrence of an event in future, and
determine a notice timing for prompting schedule registration of the predicted event, in consideration of a preparation period of time of the user for the predicted event.

(2) The information processing apparatus according to (1) described above,
in which on the basis of the behavior history of the user, the event recommendation control unit calculates the preparation period of time in accordance with a purpose of the predicted event, and subtracts the preparation period of time from an occurrence period of the predicted event to determine the notice timing.

(3) The information processing apparatus according to (2) described above,
in which the behavior history of the user includes an event occurrence history and a schedule history, and
the event recommendation control unit calculates the preparation period of time according to the purpose of the event, on the basis of a difference between each of occurrence dates of a past event based on the event occurrence history and a schedule registration date corresponding to the occurrence date of the past event.

(4) The information processing apparatus according to (3) described above,
in which the behavior history of the user further includes a search history of information regarding an event by the user, and
the event recommendation control unit calculates the preparation period of time for each classification of the purpose of the event, further in consideration of a difference between the occurrence date of the past event based on the event occurrence history and a search date corresponding to the occurrence date of the past event.

(5) The information processing apparatus according to any one of (1) to (4) described above,
in which the event recommendation control unit calculates the preparation period of time in accordance with a field of a spot for the predicted event.

(6) The information processing apparatus according to (5) described above, in which the event recommendation control unit calculates the preparation period of time, further in consideration of popularity of the spot for the predicted event.

(7) The information processing apparatus according to (5) or (6) described above, in which the event recommendation control unit calculates the preparation period of time, further in consideration of a period or a season of occurrence of the predicted event.

(8) The information processing apparatus according to any one of (1) to (7) described above, in which the behavior history of the user includes an event occurrence history and a schedule history.

(9) The information processing apparatus according to any one of (1) to (8) described above,
in which the event recommendation control unit predicts the occurrence of the event in future, in accordance with a habit of the user based on the behavior history of the user.

(10) The information processing apparatus according to (9) described above,
in which the event recommendation control unit selects a candidate of a spot for the predicted event, in accordance with a preference of the user.

(11) The information processing apparatus according to (10) described above,
in which the event recommendation control unit selects the candidate of the spot, further in accordance with a family structure of the user.

(12) The information processing apparatus according to any one of (1) to (11) described above, further including:
a notice control unit configured to notify the user of the prompting of the schedule registration of the predicted event at the determined notice timing.

(13) The information processing apparatus according to (12) described above,
in which the notice control unit controls to notify the user again, for a change in a status of a spot for the event of which the user has been notified.

(14) An information processing method with a processor, including:

predicting occurrence of an event in future, on the basis of a behavior history of a user; and
determining a notice timing for prompting schedule registration of the predicted event, in consideration of a preparation period of time of the user for the predicted event.

(15) A program for causing a computer to function as an event recommendation control unit configured to:

predict occurrence of an event in future, on the basis of a behavior history of a user; and
determine a notice timing for prompting schedule registration of the predicted event, in consideration of a preparation period of time of the user for the predicted event.

REFERENCE SIGNS LIST

| | |
|---|---|
| 1 | Information distribution terminal |
| 2 | Server |
| 3 | Network |
| 10 | Control unit |
| 11 | Communication unit |
| 12 | Input unit |
| 13 | Output unit |
| 14 | Storage unit |
| 20 | Control unit |
| 20a | Spot information collection unit |
| 20b | Spot information analysis unit |
| 20c | Event recommendation control unit |
| 20d | User history management unit |
| 20e | Reaction analysis unit |
| 20f | Environment analysis unit |
| 20g | Information integration control unit |
| 21 | Communication unit |
| 22 | Storage unit |
| 22a | Spot information storage unit |
| 22b | Spot analysis information storage unit |
| 22c | Recommendation information storage unit |
| 22d | User history storage unit |
| 22e | Reaction analysis information storage unit |
| 22f | Environment analysis information storage unit |
| 22g | Integration information storage unit |
| 200 | Spot information collection module |
| 210 | Spot information analysis module |
| 220 | Event recommendation module |
| 230 | User history management module |
| 240 | Reaction analysis module |
| 250 | Environment analysis module |
| 260 | Information integration module |

**Claims**

**1.** An information processing apparatus, comprising:

an event recommendation control unit configured to predict, on a basis of a behavior history of a user, occurrence of an event in future, and
determine a notice timing for prompting schedule registration of the predicted event, in consideration of a preparation period of time of the user for the predicted event.

**2.** The information processing apparatus according to claim 1,
wherein on the basis of the behavior history of the user, the event recommendation control unit calculates the preparation period of time in accordance with a purpose of the predicted event, and subtracts the preparation period of time from an occurrence period of the predicted event to determine the notice timing.

3. The information processing apparatus according to claim 2,
wherein the behavior history of the user includes an event occurrence history and a schedule history, and
the event recommendation control unit calculates the preparation period of time according to the purpose of the event, on the basis of a difference between each of occurrence dates of a past event based on the event occurrence history and a schedule registration date corresponding to the occurrence date of the past event.

4. The information processing apparatus according to claim 3,
wherein the behavior history of the user further includes a search history of information regarding an event by the user, and
the event recommendation control unit calculates the preparation period of time for each classification of the purpose of the event, further in consideration of a difference between the occurrence date of the past event based on the event occurrence history and a search date corresponding to the occurrence date of the past event.

5. The information processing apparatus according to claim 1,
wherein the event recommendation control unit calculates the preparation period of time in accordance with a field of a spot for the predicted event.

6. The information processing apparatus according to claim 5, wherein the event recommendation control unit calculates the preparation period of time, further in consideration of popularity of the spot for the predicted event.

7. The information processing apparatus according to claim 5, wherein the event recommendation control unit calculates the preparation period of time, further in consideration of a period or a season of occurrence of the predicted event.

8. The information processing apparatus according to claim 1, wherein the behavior history of the user includes an event occurrence history and a schedule history.

9. The information processing apparatus according to claim 1,
wherein the event recommendation control unit predicts the occurrence of the event in future, in accordance with a habit of the user based on the behavior history of the user.

10. The information processing apparatus according to claim 9,
wherein the event recommendation control unit selects a candidate of a spot for the predicted event, in accordance with a preference of the user.

11. The information processing apparatus according to claim 10,
wherein the event recommendation control unit selects the candidate of the spot, further in accordance with a family structure of the user.

12. The information processing apparatus according to claim 1, further comprising:
a notice control unit configured to notify the user of the prompting of the schedule registration of the predicted event at the determined notice timing.

13. The information processing apparatus according to claim 12,
wherein the notice control unit performs control to notify the user again, for a change in a status of a spot for the event of which the user has been notified.

14. An information processing method with a processor, comprising:

predicting occurrence of an event in future, on a basis of a behavior history of a user; and
determining a notice timing for prompting schedule registration of the predicted event, in consideration of a preparation period of time of the user for the predicted event.

15. A program for causing a computer to function as an event recommendation control unit configured to:

predict occurrence of an event in future, on a basis of a behavior history of a user; and
determine a notice timing for prompting schedule registration of the predicted event, in consideration of a preparation period of time of the user for the predicted event.

# FIG. 1

```
┌──────────────┐                        ┌──────────────┐
│ INFORMATION  │~1          3           │              │~2
│ DISTRIBUTION │─────────  ⊗  ─────────│    SERVER    │
│   TERMINAL   │                        │              │
└──────────────┘                        └──────────────┘
```

# FIG. 2

1: INFORMATION
DISTRIBUTION
TERMINAL

```
              ┌──────────────────┐
              │  COMMUNICATION   │~11
              │      UNIT        │
              └──────────────────┘
                       ↕
┌──────────┐  ┌──────────────────┐  ┌──────────┐
│INPUT UNIT│~12          ~10      │OUTPUT UNIT│~13
│          │─▶│   CONTROL UNIT   │─▶│          │
└──────────┘  │                  │  └──────────┘
              └──────────────────┘
                       ↕
              ┌──────────────────┐
              │   STORAGE UNIT   │~14
              └──────────────────┘
```

# FIG. 3

2: SERVER

```
┌─────────────────┐
│  COMMUNICATION  │ ～21
│      UNIT       │
└─────────────────┘
         ↕
┌─────────────────────────┐ ～20
│                         │
│                         │      ～22
│                         │   ┌──────────────┐
│     CONTROL UNIT        │↕→ │ STORAGE UNIT │
│                         │   └──────────────┘
│                         │
└─────────────────────────┘
```

## FIG. 4

2: SERVER

**SPOT INFORMATION COLLECTION MODULE** (~200)

SPOT INFORMATION COLLECTION UNIT (~20a) ↔ SPOT INFORMATION STORAGE UNIT (~22a)

**SPOT INFORMATION ANALYSIS MODULE** (~210)

SPOT INFORMATION ANALYSIS UNIT (~20b) ↔ SPOT ANALYSIS INFORMATION STORAGE UNIT (~22b)

**EVENT RECOMMENDATION MODULE** (~220)

EVENT RECOMMENDATION CONTROL UNIT (~20c) ↔ RECOMMENDATION INFORMATION STORAGE UNIT (~22c)

**INFORMATION INTEGRATION MODULE** (~260)

INFORMATION INTEGRATION CONTROL UNIT (~20g) ↔ INTEGRATION INFORMATION STORAGE UNIT (~22g)

**USER HISTORY MANAGEMENT MODULE** (~230)

USER HISTORY MANAGEMENT UNIT (~20d) ↔ USER HISTORY STORAGE UNIT (~22d)

**REACTION ANALYSIS MODULE** (~240)

REACTION ANALYSIS UNIT (~20e) ↔ REACTION ANALYSIS INFORMATION STORAGE UNIT (~22e)

**ENVIRONMENT ANALYSIS MODULE** (~250)

ENVIRONMENT ANALYSIS UNIT (~20f) ↔ ENVIRONMENT ANALYSIS INFORMATION STORAGE UNIT (~22f)

EP 3 579 168 A1

# FIG. 5

SPOT ANALYSIS INFORMATION

| CLASS | METADATA | OUTLINE | TYPE |
|---|---|---|---|
| ■ Id | spotId | ik+SPOT ID | string |
| ■ Content Vector<br><br>METADATA FOR MEASURING SIMILARITY BETWEEN SPOTS, AND RELATIONSHIP BETWEEN SPOT AND PREFERENCE | name | SPOT NAME | string |
| | description | SPOT DESCRIPTION | string |
| | nudgeCategoryId | GENERAL CATEGORY DEFINED BY SYSTEM | int |
| | serviceCategoryId | SPECIALIZED FIELD PROVIDED BY SERVICE | int |
| | tag | TAG | int |
| | ageId | TARGET AGE | int |
| | featureId | FACILITY AVAILABILITY | int |
| | tipTitle | TITLE OF WORD OF MOUTH | string |
| | tipDescription | DETAILS OF WORD OF MOUTH | string |
| ■ Content Info<br><br>METADATA RELATED TO DETAILED INFORMATION REGARDING SPOT | name | SPOT NAME | string |
| | description | SPOT DESCRIPTION | string |
| | tips | WORD OF MOUTH | List<IkTipInfo><br>IkTipInfo#title,description |
| | areaId | AREA (STATION) Id | int |
| | areaDist | DISTANCE FROM AREA (M) | double |
| | phone | TELEPHONE NUMBER | string |
| | businessHours | OPENING HOURS | string |
| | regularHoliday | REGULAR HOLIDAY | string |
| | address | ADDRESS | string |

# FIG. 6

| CLASS | METADATA | OUTLINE | TYPE |
|---|---|---|---|
| ■ Content Info | childRate | CHILD FEE | string |
| | adultRate | ADULT FEE | string |
| | access | ACCESS VIA TRANSPORTATION | string |
| | parkingMax | MAXIMUM PARKING SPACE | string |
| | parkingRate | PARKING FEE | string |
| | others | OTHERS | string |
| | latitude | LATITUDE | double |
| | longitude | LONGITUDE | double |
| | officiaUrl | OFFICIAL URL | string |
| | ticketUrl | TICKET PURCHASE URL | string |
| | monthlyRanking | MONTHLY RANKING | int |
| | rating | OVERALL RATING | flost |
| | toddlerRating | CHILD UNDER SCHOOL AGE RATING | flost |
| | childRating | ELEMENTARY SCHOOL STUDENT RATING | flost |
| | tipsNum | WORD OF MOUTH RATING | int |
| | wantNum | WANT TO GO! RATING | int |
| | photos | PHOTO URL AND description | List<lkPhotoInfo> lkPhotoInfo#url,description |
| | highlights | HIGHLIGHT TITLE AND URL | List<lkHighlightInfo> lkHighlighInfo#titlel,url |

# FIG. 7

| Feedback | DESCRIPTION |
|---|---|
| User Id | USER ID |
| Feedback Type | Feedback TYPE |
| Item Id | ITEM ID (SPOT ID) |
| Time stamp | REGISTERED DATE AND TIME |

| FeedbackType | DESCRIPTION |
|---|---|
| REGISTER_SCHEDULE | REGISTRATION OF DESTINATION IN SCHEDULE |
| ADD_WISHLIST | ADDITION OF DESTINATION TO WISH LIST |
| CHECK_IN | EXPERIENCE IN GOING OUT TO DESTINATION |
| SHOW_LIST | EXPERIENCE IN BROWSING OF DESTINATION LIST SCREEN |
| SHOW_DETAIL | EXPERIENCE IN BROWSING OF DESTINATION DETAILED SCREEN |

EP 3 579 168 A1

# FIG. 8

| DATE AND TIME | EVENT REGISTRATION | EVENT OCCURRENCE | NOTICE |
|---|---|---|---|
| 2015/3/29 | FAMILY TRIP #1 (32 DAYS BEFORE) | | |
| 2015/4/30 | | FAMILY TRIP #1 | QUESTION (PROMPT RATING) EXAMPLE: "WAS ■■ MEAL TASTY?" |
| 2015/5/1 | | FAMILY TRIP #1 | QUESTION (PROMPT RATING) EXAMPLE: "WERE YOU SATISFIED WITH ●● HOTEL?" |
| 2015/5/2 | | FAMILY TRIP #1 | QUESTION (PROMPT RATING) EXAMPLE: "DID YOU TRAVEL COMFORTABLY BY CAR?" |
| 2016/4/4 | FAMILY TRIP #2 (28 DAYS BEFORE) | | |
| 2016/5/2 | | FAMILY TRIP #2 | QUESTION (PROMPT RATING) EXAMPLE: "DID YOU ENJOY ▲▲ PERFORMANCE?" |
| 2016/5/3 | | FAMILY TRIP #2 | QUESTION (PROMPT RATING) EXAMPLE: "WERE YOU SATISFIED WITH ●● INN?" |
| 2016/5/4 | | FAMILY TRIP #2 | QUESTION (PROMPT RATING) EXAMPLE: "DID YOU TRAVEL COMFORTABLY BY CAR?" |
| 2017/4/1 | FAMILY TRIP #3 (30 DAYS BEFORE, REGISTRATION PREDICTION) | | EVENT RECOMMENDATION (PROMPT REGISTRATION) EXAMPLE: "HOW ABOUT PLANNING FAMILY TRIP FOR GW HOLIDAY BY NOW? HOW ABOUT GOING TO HOT SPRING WITHIN ONE-HOUR TRAVELING BY CAR?" |
| 2017/4/4 | FAMILY TRIP #3 (CHANGE IN RESERVATION STATUS, RESERVATION PROPOSAL) | | EVENT RECOMMENDATION (PROMPT RESERVATION) "RECOMMENDED □□ HOT SPRING ●● HOTEL HAS VACANT ROOMS SLIGHTLY LEFT. EARLY RESERVATION IS RECOMMENDED." |
| 2017/5/1 | | FAMILY TRIP #3 (EVENT OCCURRENCE PREDICTION) | |

EP 3 579 168 A1

# FIG. 9

~130

HOW ABOUT PLANNING FAMILY TRIP FOR GW HOLIDAY BY NOW?
RECOMMENDED FOR FAMILIES WITH CHILDREN (ELEMENTARY SCHOOL STUDENTS),
RESORT AREA ALONG ○○ BEACH WITHIN ABOUT ONE-HOUR TRAVELING BY CAR!

13 MINUTES ★★★★☆
1 ○○○
BY TRAIN······

9 MINUTES ★★★☆☆
2 □○○ COTTAGE
BY TRAIN······

13 MINUTES ★★★☆☆
3 □□ HOTEL
BY CAR······

14 MINUTES ★★★☆☆
4 △△ HOT SPRING
BY TRAIN······

1 MINUTE ★★★★☆
5 □□○○ HOTEL
BY CAR······

9 MINUTES ★★★★☆
6 □□ PARK
BY CAR······

131

~132

4 △△ HOT SPRING
BY TRAIN OR BUS···········

# FIG. 10

SPOT RECOMMENDATION PROCESSING START

IS SPOT ANALYSIS PERFORMED? — S103

NO

YES

PERFORM SPOT ANALYSIS BY SPOT ANALYSIS MODULE — S106

IS EVENT RECOMMENDATION PERFORMED? — S109

NO

YES

ACQUIRE USER HISTORY (E.G., SCHEDULE HISTORY INFORMATION) FROM USER HISTORY MANAGEMENT MODULE — S112

SET RECOMMENDATION CONDITION (DATE AND TIME, PERIOD OF TIME, AND PURPOSE) — S115

PERFORM SPOT RECOMMENDATION PROCESSING FOR EVENT BY EVENT RECOMMENDATION MODULE — S118

OUTPUT SPOT RECOMMENDATION RESULT TO INFORMATION INTEGRATION MODULE — S121

END

*FIG. 11*

```
┌─────────────────────────────────────┐
│ RECOMMENDATION EVENT NOTICE PROCESSING │
│               START                   │
└─────────────────────────────────────┘
                  │
                  ▼
         ┌──────────────────┐  S203
    NO   │    IS EVENT       │
◄────────│ PREDICTION PERFORMED? │
         └──────────────────┘
                  │ YES
                  ▼
  ┌──────────────────────────────────────────────┐
  │ PERFORM EVENT PREDICTION BY EVENT RECOMMENDATION MODULE │ S206
  └──────────────────────────────────────────────┘
                  │
                  ▼
         ┌──────────────────┐  S209
    NO   │ IS REGISTERED/PREDICTED │
◄────────│   EVENT PRESENT?   │
         └──────────────────┘
                  │ YES
                  ▼
         ┌──────────────────┐  S212
    NO   │ HAS REGISTRATION  │
◄────────│ TIMING FOR PREDICTED EVENT │
         │     REACHED?      │
         └──────────────────┘
                  │ YES
                  ▼
  ┌──────────────────────────────────────────┐
  │ ADD PREDICTED EVENT AND QUESTION TO NOTICE TARGET │ S215
  └──────────────────────────────────────────┘
                  │
                  ▼
         ┌──────────────────┐  S218
    NO   │   HAS STATUS      │
◄────────│ OF REGISTERED/PREDICTED │
         │  EVENT CHANGED?   │
         └──────────────────┘
                  │ YES
                  ▼
  ┌──────────────────────────────────────────────┐
  │ ADD STATUS-CHANGED EVENT AND QUESTION TO NOTICE TARGET │ S221
  └──────────────────────────────────────────────┘
                  │
                  ▼
         ┌──────────────────┐  S224
    NO   │    HAS EVENT      │
◄────────│    OCCURRED?      │
         └──────────────────┘
                  │ YES
                  ▼
  ┌──────────────────────────────────────────────┐
  │ ADD OCCURRENCE EVENT AND QUESTION TO NOTICE TARGET │ S227
  └──────────────────────────────────────────────┘
                  │
                  ▼
  ┌──────────────────────────────────────────────┐
  │ OUTPUT NOTICE TARGET TO INFORMATION INTEGRATION MODULE │ S230
  └──────────────────────────────────────────────┘
                  │
                  ▼
  ┌──────────────────────────────────────────────────────────┐
  │ PERFORM NOTICE PROCESSING BY INFORMATION INTEGRATION MODULE │ S233
  │ (OPERATE FOR EVENT RECOMMENDATION AND QUESTION BY USER)     │
  └──────────────────────────────────────────────────────────┘
                  │
                  ▼
              ┌───────┐
              │  END  │
              └───────┘
```

## INTERNATIONAL SEARCH REPORT

| | International application No. |
|---|---|
| | PCT/JP2017/037874 |

**A. CLASSIFICATION OF SUBJECT MATTER**
Int.Cl. G06Q10/10(2012.01)i, G06F17/30(2006.01)i

According to International Patent Classification (IPC) or to both national classification and IPC

**B. FIELDS SEARCHED**

Minimum documentation searched (classification system followed by classification symbols)
Int.Cl. G06Q10/10, G06F17/30

Documentation searched other than minimum documentation to the extent that such documents are included in the fields searched
| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2011-141840 A (TOSHIBA CORPORATION) 21 July 2011, paragraphs [0030]-[0082], fig. 1-14<br>& US 2011/0173638 A1, paragraphs [0053]-[0129], fig. 1-14 | 1-2, 5-15<br>3-4 |
| Y | JP 2015-66029 A (GREE INC.) 13 April 2015, paragraphs [0076]-[0078]<br>(Family: none) | 1-2, 5-15 |
| Y | JP 2012-168614 A (FUJITSU LIMITED) 06 September 2012, paragraph [0090], fig. 15<br>& US 2012/0209863 A1, paragraph [0122], fig. 15 | 1-2, 5-15 |

☒ Further documents are listed in the continuation of Box C.

☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09.01.2018 | 23.01.2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

International application No.

PCT/JP2017/037874

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2015-11431 A (SONY CORPORATION) 19 January 2015, paragraphs [0035]-[0037], [0055], fig. 6 & US 2015/0006220 A1, paragraphs [0060]-[0062], [0080], fig. 6 | 8 |
| A | JP 2013-200701 A (NEC CORPORATION) 03 October 2013, paragraphs [0084]-[0123], fig. 17-26 & US 2015/0116447 A1, paragraphs [0159]-[0209], fig. 17-26 & WO 2013/146082 A1 & EP 2829981 A1 & AU 2013238427 A1 & CA 2867561 A1 & CN 104205072 A | 1-15 |
| A | JP 2004-534340 A (KONINKL PHILIPS ELECTRONICS NV) 11 November 2004, entire text, all drawings & US 2003/0014292 A1, whole document & WO 2003/007204 A1 & EP 1407407 A1 | 1-15 |
| A | JP 2008-123214 A (NEC CORPORATION) 29 May 2008, entire text, all drawings (Family: none) | 1-15 |
| A | JP 2001-350884 A (NEC CORPORATION) 21 December 2001, entire text, all drawings & US 2001/0051935 A1, whole document | 1-15 |

Form PCT/ISA/210 (continuation of second sheet) (January 2015)

# EP 3 579 168 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015035140 A

- JP 2005176404 A

**Non-patent literature cited in the description**

- **THOMAS HOFMANN.** Probabilistic latent semantic indexing. *Proceedings of the 22nd annual international ACM SIGIR conference ON Research and development in information retrieval,* 1999

- **DAVID M. BLEI ; ANDREW Y. NG ; MICHAEL I. JORDAN.** Latent Dirichlet Allocation. *Journal of Machine Learning Research,* 2003, vol. 3